# EUROPÄISCHE PATENTSCHRIFT

(11) **EP 1 240 274 B1**
(45) Veröffentlichungstag und Bekanntmachung des Hinweises auf die Patenterteilung: **06.12.2006**
(21) Anmeldenummer: 00975950.7
(22) Anmeldetag: 28.10.2000
(51) Int. Cl.: C10B 53/02

(54) **VERFAHREN ZUR ERZEUGUNG VON ERNEUERBAREN BRENN- UND KRAFTSTOFFEN**
METHOD FOR PRODUCING RENEWABLE COMBUSTIBLE SUBSTANCES AND FUELS
PROCEDE POUR PRODUIRE DES COMBUSTIBLES ET DES CARBURANTS RENOUVELABLES

(30) Priorität: 24.11.1999 DE 19956560
(43) Veröffentlichungstag der Anmeldung: 18.09.2002
(73) Patentinhaber: CRG Kohlenstoffrecycling Ges.mbH, 09599 Freiberg (DE)
(72) Erfinder: WOLF, Bodo, 09638 Lichtenberg (DE)
(74) Vertreter: Patentanwälte Zellentin & Partner
(86) Internationale Anmeldenummer: PCT/EP2000/010632
(87) Internationale Veröffentlichungsnummer: WO 2001/038456

(56) Entgegenhaltungen:
- EP-A- 0 066 498
- DE-A- 4 438 902
- DE-C- 19 755 693
- GB-A- 274 465
- OUELLETTE N.; ROGNER H.-H.; SCOTT D.S.: 'HYDROGEN FROM REMOTE EXCESS HYDROELECTROCITY. PART II: HYDROGEN PEROXIDE OR BIOMETHANOL' INT J HYDROGEN ENERGY Bd. 20, Nr. 11, 1995, Seiten 873 - 880, XP004041080

## Beschreibung

Die Erfindung betrifft ein Verfahren zur Erzeugung von erneuerbaren Kraftstoffen aus Biomassen aller Art, vorzugsweise Pflanzen und Holz, Wasser und Elektroenergie, vorzugsweise mit Hilfe regenerativer Energie hergestellt.

Die Erfindung kann angewendet werden zur Umwandlung von Biomassen aller Art in marktübliche Kohlenwasserstoffe wie Benzin, Diesel-und Heizöl, Alkohole wie Methanol, Äthanol, Schmiermittel, Kunststoffe aller Art sowie zur Speicherung und zum Transport von Wasserstoff, vorzugsweise hergestellt mit Hilfe von regenerativer Energie, und damit zur Integration von regenerativer Energie in bestehende Systeme der öffentlichen Energieversorgung, insbesondere im Verkehrswesen, aber auch in die Stoffwirtschaft der chemischen Industrie.

Beim Stand der Technik sind fossile Brennstoffe, also von der Natur durch Inkohlung karbonisierte Biomasse, die Basis sowohl der organischen Stoffwirtschaft als auch der Energieversorgung. Daneben dienen Kernenergie und Wasserkraft fast ausschließlich zur Erzeugung von Elektroenergie. Ein Teil der fossilen Brennstoffe wird veredelt, d.h. in eine für spezielle Anwendungsfälle besser geeignete Form gebracht. Weit verbreitet ist die Herstellung von Kraftstoffen aus fossilen Brennstoffen. Dabei werden flüssige, fossile Brennstoffe fraktioniert destilliert oder mit Wasserdampf und/oder Sauerstoff durch Vergasung in Gas umgewandelt. Charakteristisch für die Umwandlung fossiler Brennstoffe in Kraftstoffe ist die im Zuge der Veredelung erforderliche Veränderung der stofflichen Zusammensetzung durch Zerlegung in flüchtige Bestandteile und Kohlenstoff in Form von Destillatrückständen oder das Auswaschen von Kohlendioxid aus Syntheserohgasen. Die entscheidenden Nachteile der Nutzung fossiler Brenstoffe sind die historisch kurze Endlichkeit ihrer Verfügbarkeit und die Emission von Kohlendioxid in einem so hohem Maße, dass die Reproduktionskraft der Natur überfordert wird.

Alterativ zur Anwendung fossiler Brennstoffe und deren Veredelung wurde deshalb bereits mehrfach vorgeschlagen, Biomasse für die Erzeugung von Brenn- und Synthesegas nach bekannten Verfahren der Vergasung einzusetzen. Kennzeichnend für diese den Stand der Technik darstellenden Verfahren zur Erzeugung von Synthesegas aus Biomasse ist die Einstellung der erforderlichen stofflichen Zusammensetzung durch Abtrennung von Kohlenstoff oder Kohlendioxid.
Ein Beispiel für die Anwendung der Winklervergasung gibt der Beitrag von E. Nitschke auf dem KFA-Symposium "Biomasse" vom 12./13.11.1981 in Jülich. Analog zu den Verfahren der Umwandlung von fossilen Brennstoffen durch Vergasung muss auch hier im Zuge der Erzeugung von Synthesegas das erforderliche Gasgemisch durch Konvertierung von Kohlenmonoxid und Kohlendioxidentfernung eingestellt werden. In diesem Beitrag wird aber auch darauf hingewiesen, dass durch Zumischung von durch Elektrolyse von Wasser hergestelltem Wasserstoff die sonst üblichen Prozessstufen CO-Konvertierung und CO₂-Wäsche entfallen und die Abführung von Kohlenstoff im Zuge der Stoffumwandlung vermieden werden können.

Neuere Vorschläge wurden von H. Kubiak und H.J. Mühlen auf der Grundlage der DE-A 19755693.0 vorgestellt. Wesentliches Merkmal dieser Patentanmeldung ist die thermische Zerlegung der Biomasse durch Pyrolyse mit Hilfe eines extern aufgeheizten, festen Wärmeträgers in ihre flüchtigen Bestandteile und Koks. Der Koks wird mit dem Wärmeträger in eine Feuerung eingetragen und verbrannt. Die freigesetzte Wärme dient der Aufheizung des Wärmeträgers und der indirekten Beheizung eines "Reformers" ähnlich den bekannten Steamreformern, in dem die flüchtigen Bestandteile der Biomasse zu einem wasserstoffreichen Gas, das vorzugsweise als Brennstoff für Brennstoffzellen verwendet werden soll, umgewandelt werden.

Eine Zusammenfassung des Standes der Technik zur Herstellung von erneuerbaren Kraftstoffen gibt Thomas Dreier in "Biogene Kraftstoffe - Energetische, ökonomische und ökologische Analyse", IfE-Schriftenreihe, Heft 38, 1. Auflage 1999, ENERGIE & MANAGEMENT-Verlagsgesellschaft, Herrsching, ISBN 3-933283-13-2.

Die Belastung der Umwelt mit Kohlendioxid und die absehbare Endlichkeit der Brennstoffe sowie die Nichtakzeptanz der Kernenergie führten zu Vorschlägen, alternativ zu fossilen Brennstoffen Wasserstoff, hergestellt über die Elektrolyse von Wasser, als universellen Energieträger einzuführen. Da Wasserstoff bei Umgebungsdruck und -temperatur nicht transport- und lagerstabil ist, sollen kryogene Wasserstoffsysteme gebaut werden, die unterhalb der Verflüssigungstemperatur von -253 K das Kälteregime aufrecht erhalten.

Aus Quellette et al., Int. J. Hydrogen Energy, Bd 20, Nr 11, 1995, Seiten 873-880 ist ein Verfahren zur Umwandlung von Biomasse in methanol bekannt, bei welchem Holz vergast und mit Hilfe von durch Wasserelektrolyse gewonnenem Sauerstoff und Wasserstoff zu Methanol umgesetzt wird.

Das Ziel der Erfindung sind technisch realisierbare verfahrenstechnische Vorschläge zur Umwandlung von regenerativer Energie, vorzugsweise von Wind- und Wasserkraft, mit Hilfe von nachwachsenden Rohstoffen in unter den thermodynamischen Bedingungen der Umwelt in Bezug auf Druck und Temperatur stabile Energieträger marktüblicher Form, die die technischen Risiken kryogener Wasserstoffsysteme vermeiden und wirtschaftlicher als diese zu betreiben sind.

Das Ziel wird erreicht durch eine neue Kombination von Prozessen der Biomasseverwertung und der Erzeugung von Wasserstoff und Sauerstoff durch Elektrolyse von Wasser.

Die technische Aufgabe der Erfindung besteht darin, den für die chemische Bindung des Wasserstoffs erforderlichen Kohlenstoff aus nachwachsenden Rohstoffen oder anderen Biomassen so zu gewinnen, dass letztlich mit bekannten Verfahren der Vergasung, der Methanol- oder Fischer-Tropsch-Synthese, aber auch der Hydrierung aus regenerativer Energie und Biomasse marktübliche Brenn- und Kraftstoffe sowie andere Kohlen-Wasserstoff-Produkte der chemischen Industrie hergestellt werden können.

Die Lösung dieser Aufgabe gelingt mit einem Verfahren gemäß Hauptanspruch.

Der wirtschaftliche Vorteil der Erfindung liegt darin, dass der aus Biomassen hergestellte Koks über große Entfernungen, bis hin zu mit herkömmlichen Methoden nicht erschließbaren Quellen regenerativer Energie, z.B. großer Wasserkräfte, oder zu vorteilhaften Knotenpunkten elektrischer Netze transportiert werden kann, an denen gute Voraussetzungen für die Erzeugung von Wasserstoff durch Elektrolyse von Wasser bestehen, so dass der Wasserstoff am Standort seiner Produktion in marktübliche, unter Umgebungsbedingungen transport- und lagerstabile Brenn- und Kraftstoffe umgewandelt werden kann.

### Ausführungsbeispiel

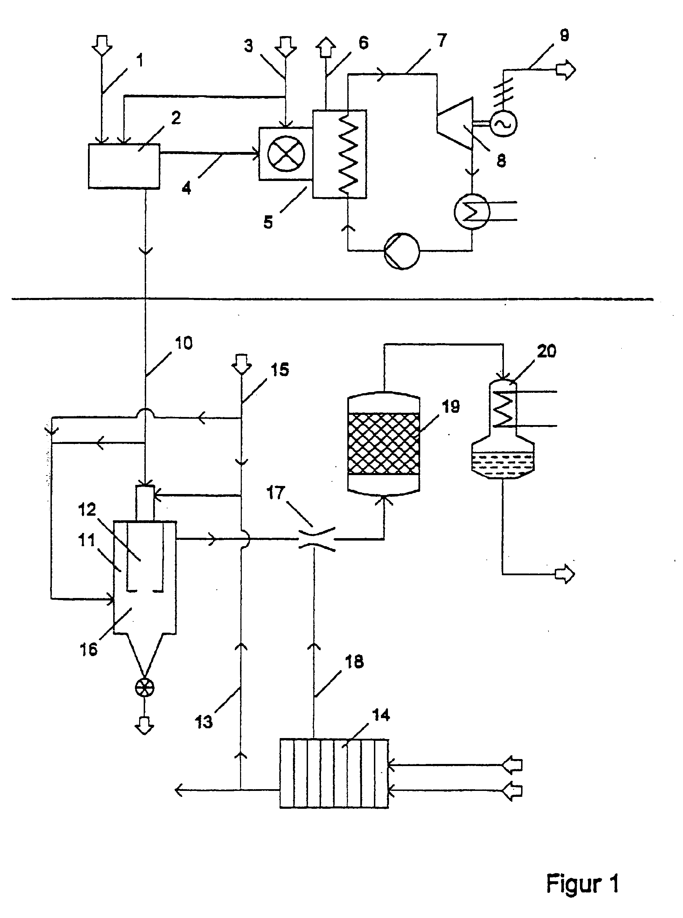

Die Erfindung wird mit Hilfe von Figur 1 wie nachfolgend beschrieben:

Mindestens lufttrockene Biomasse 1 wird in der Vorrichtung 2 mit Luft 3 bei einem Temperaturniveau von 250 bis 1.000 °C partiell oxidiert. Die dabei anfallenden flüchtigen Bestandteile 4 werden in einem Kessel 5 mit Luft zu üblichem Verbrennungsgas 6 verbrannt, das an die Umgebung abgegeben wird. Die frei gesetzte Wärme wird an einen Dampfkraftprozess 7 abgeführt und dort mit Hilfe einer Dampfturbinenanlage 8 in Elektroenergie 9 umgewandelt.

Der bei der partiellen Oxidation in der Vorrichtung 2 aus Biomasse produzierte Koks 10 wird einem Vergasungsreaktor 11 zugeführt und dort in einer ersten Stufe 12 mit Sauerstoff 13 aus der Wasserelektrolyse 14, der mit Wasserdampf oder Kohlendioxid 15 vermischt sein kann, primär zu Kohlenmonoxid vergast. In einer zweiten Prozessstufe 16 kann dem heißen Kohlenmonoxid vorteilhaft nochmals Biokoks 10 und Wasserdampf zum Zwecke der Temperaturabsenkung durch endotherme chemische Reaktion des Kohlenstoffs mit dem Gasdampfgemisch zugegeben werden. Das im Vergasungsreaktor 11 erzeugte kohlenmonoxidreiche Gas wird in der Vorrichtung 17, ggf. nach Entstaubung mit Wasserstoff 18 aus der Wasserelektrolyse 14 zu Methanolsynthesegas vermischt und danach in eine katalytische Methanolsynthese 19 eingeleitet. Die Methanoldämpfe werden entsprechend dem Stand der Technik aus dem Gasdampfgemisch im Kühler 20 ausgetaut. Das dabei anfallende Restgas wird entsprechend Stand der Technik in den Prozess zurückgeführt oder extern genutzt.

## Patentansprüche

1. Verfahren zur Erzeugung von erneuerbaren Brenn- und Kraftstoffen aus nachwachsenden Rohstoffen oder anderen Biomassen, Wasser und regenerativer Energie, wobei dass man die nachwachsenden Rohstoffe oder Biomassen bei erhöhter Temperatur und unter Bildung von Koks bei Temperaturen von 250 - 1000 °C partiell oxidiert, wobei man die dabei anfallenden flüchtigen Bestandteile der örtlichen oder regionalen Energieversorgung zuführt und den entstehenden Koks am Ort der Synthese der erneuerbaren Brenn- und Kraftstoffe durch Vergasung mit Sauerstoff in ein Kohlenmonoxid-Wasserstoff-Gemisch zwecks Herstellung dieser umwandelt, wobei der hierzu erforderliche Sauerstoff und Wasserstoff durch Elektrolyse von Wasser gewonnen wurden

## Claims

1. Method for producing renewable combustible substances and fuels from renewable raw materials or other biomasses, water and regenerative energy, by partially oxidizing the renewable raw materials or biomasses at an elevated temperature and under the formation of coke at temperatures of 250 to 1,000°C, with the resulting volatile components being provided to the local or regional energy supply system and the resulting coke at the place of synthesis of the renewable combustible substances and fuels being converted - by gasification with oxygen - into a carbon monoxide / hydrogen mixture for the purpose of producing them, with the oxygen and hydrogen required for it having been obtained through the electrolysis of water.

## Revendications

1. Procédé pour produire des combustibles et carburants renouvelables à partir de matières premières d'origine végétale ou autres biomasses, d'eau et d'énergie renouvelable, consistant à soumettre les matières premières d'origine végétale ou les biomasses, à température accrue et en formant du coke, à une oxydation partielle à des températures comprises entre 250 et 1000°C, à amener les composants volatils produits à l'approvisionnement énergétique local ou régional et à transformer le coke produit, sur le lieu de la synthèse des combustibles et carburants renouvelables, par gazéification à l'oxygène, en un mélange de monoxyde de carbone et d'hydrogène de manière à obtenir ceux-ci, l'oxygène et l'hydrogène nécessaires à cet effet ayant été obtenus par électrolyse de l'eau.
